(19) Europäisches Patentamt
European Patent Office
Office européen des brevets

(11) Veröffentlichungsnummer: **0 025 009**
**A2**

(12) **EUROPÄISCHE PATENTANMELDUNG**

(21) Anmeldenummer: **80810212.3**

(22) Anmeldetag: **27.06.80**

(51) Int. Cl.³: **C 08 K 5/00**
C 08 K 5/55

(30) Priorität: **03.07.79 CH 6196/79**

(43) Veröffentlichungstag der Anmeldung:
**11.03.81 Patentblatt 81/10**

(84) Benannte Vertragsstaaten:
**DE FR GB NL**

(71) Anmelder: **CIBA-GEIGY AG**
**Patentabteilung Postfach**
**CH-4002 Basel(CH)**

(72) Erfinder: **Abeler, Gerd, Dr.**
**Alter Wixhäuser Weg 61**
**D-6100 Darmstadt(DE)**

(72) Erfinder: **Müller, Horst, Dr.**
**Reichenberger Strasse 12**
**D-6149 Fürth/Odenwald(DE)**

(54) **Aus einem Metallmercaptid und einem Borsäureester bestehende Stabilisatormischung und deren Verwendung zum Stabilisieren chlorhaltiger Polymere.**

(57) Stabilisatorgemische bestehend aus
a) einem Metallmercaptid der Formel I
$Q(SX)_3$ (I)
und
b) einem cyclischen Borsäureester der Formel II

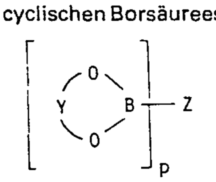

(II)

Bezüglich der Bedeutungen der Substituenten und Symbole in den Formeln I und II wird auf Anspruch 1 verwiesen.

Diese Stabilisatorgemische gewährleisten eine ausgezeichnete thermostabilisierende Wirkung in chlorhaltigen Thermoplasten.

EP 0 025 009 A2

Case 3-12416/=

Neue Stabilisatorgemische zur Stabilisierung von chlorhaltigen Thermoplasten.

Die vorliegende Erfindung betrifft neue Stabilisatorgemische bestehend aus Metallmercaptiden und cyclischen Borsäureestern zur Stabilisierung von chlorhaltigen Thermoplasten.

Aus der Japanischen Offenlegungsschrift 53/111.346 sind PVC-Stabilisatorgemische aus Zinnmercaptiden und acyclischen Borsäuren bekannt. Es hat sich aber gezeigt, dass diese Gemische in der Praxis insbesondere bezüglich Licht- und Lagerstabilität nicht immer ganz befriedigend sind. Als Stabilisierungsmittel für Vinylhalogenide sind in der DE-OS 26 29 202 Gemische aus Antimonmercaptiden beschrieben. Auch Orthoborsäureester allein sind aus verschiedenen Publikationen, wie beispielsweise die US-PS 2 912 400 und die GB-PS 833 853 bekannt. In allen diesen Fällen sind jedoch die Resultate bezüglich stabilisierender Wirkung für die Praxis nicht ganz ausreichend.

Es ist nun gefunden worden, dass Gemische aus Antimon- oder Zinnmercaptiden mit cyclischen Borsäureestern eine überraschend gute, für die Praxis befriedigende Stabilisierung von chlorhaltigen Thermoplasten und, insbesondere bei Verwendung von Antimonmercaptiden auch unerwartet hohe Licht- und Lagerstabilität gewährleisten.

Demnach betrifft die vorliegende Erfindung Stabilisatorgemische bestehend aus

a) einem Metallmercaptid der Formel I

$$Q(SX)_3 \qquad (I)$$

worin Q $-Sb\langle$ oder $R^1-Sn\langle$ bedeutet, X gegebenenfalls durch eine oder mehrere Gruppen -OH, $-OR^2$, $-COOR^2$ oder $-OOCR^2$ substituiertes $C_1-C_{18}$ Alkyl, $C_3-C_{12}$ Cycloalkyl, $C_2-C_{18}$ Alkenyl, Cyclohexenyl oder eine der Gruppen der Formeln

$$\left[-(CH_2)_n-O-\right]_m-R^2 \quad \text{oder} \quad \left[-(CH_2)_n-S-\right]_m-R^2 \quad \text{ist,}$$

worin n die Zahlen 2 bis 8 und m die Zahlen 1 bis 200 bedeuten, $R^1$ gegebenenfalls durch eine oder mehrere Gruppen $-COOR^2$ oder $-OR^2$ substituiertes $C_1-C_{18}$ Alkyl, Phenyl oder Benzyl und $R^2$ $C_1-C_{18}$ Alkyl oder $C_2-C_{18}$ Alkenyl sind, und

b) einem cyclischen Borsäureester der Formel II

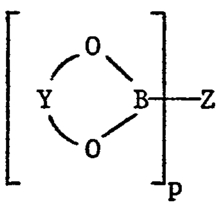

(II)

worin p die Zahlen 1 bis 4 bedeutet,
Y gegebenenfalls ein- oder mehrmals durch $C_1-C_{18}$ Alkyl, Halogen oder durch eine Gruppe $-OR^3$ oder $-COOR^3$ substituiertes o-Phenylen oder o-Naphthylen ist, wobei $R^3$ unabhängig von $R^2$ die gleiche Bedeutung wie $R^2$ hat, und

wenn n 1 ist, Z unabhängig von $R^1$ die gleiche Bedeutung wie $R^1$ hat oder Phenyl, Naphthyl, $-OX^1$ oder $-OR^4$ bedeutet, wobei $X^1$ unabhängig von X die gleiche Bedeutung wie X hat und $R^4$ gegebenenfalls ein- oder mehrmals durch $C_1-C_{18}$ Alkyl, Halogen oder durch eine Gruppe $-OR^5$, $-COOR^5$ oder $-A-COOR^5$ substituiertes Phenyl oder Npahthyl ist, worin A $C_1-C_6$ Alkylen ist und $R^5$ unabhängig von $R^2$ die gleiche Bedeutung wie $R^2$ hat, und,

wenn n 2 ist, Z eine Gruppe $-O-Y^1-O-$ bedeutet, worin $Y^1$ unabhängig von Y die gleiche Bedeutung wie Y hat und ferner $Y^1$ $C_1-C_6$ Alkylen oder eine Gruppe

$-[(CH_2)_q-O]_r-(CH_2)_q-$ oder $-[(CH_2)_q-S]_r-(CH_2)_q-$

sein kann, worin q die Zahlen 2 bis 8 und r die Zahlen 1 bis 200 bedeuten, und ferner,

wenn n 3 ist, Z eine der Gruppen der Formeln $-OCH(CH_2O-)_2$, $CH_3CH_2-C(CH_2O-)_3$ oder

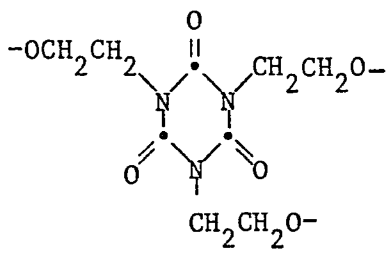

ist und,

wenn n 4 ist, Z eine Gruppe der Formel $C(CH_2O-)_4$ bedeutet.

Stellen etwaige Substituenten Halogen dar so handelt es sich vorzugsweise um Brom oder insbesondere um Chlor.

Bedeuten etwaige Substituenten $C_1$-$C_{18}$ Alkyl so handelt es sich beispielsweise um Methyl, Aethyl, n-Propyl, Isopropyl, n-Butyl, sec.-Butyl, tert.-Butyl, n-Pentyl, n-Hexyl, 2-Methyl-pentyl, 2,4-Dimethylpentyl, n-Octyl, 6-Methylheptyl, 2-Aethylhexyl, n-Nonyl, verzweigtes oder unverzweigtes Decyl, Dodecyl, Tridecyl, Tetradecyl, Hexadecyl oder Octadecyl.

Stellen etwaige Substituenten $C_3$-$C_{12}$ Cycloalkyl dar, so bedeuten sie insbesondere Cyclopentyl, Cycloheptyl und bevorzugt Cyclohexyl.

Bedeuten etwaige Substituenten $C_2$-$C_{18}$Alkenyl, so handelt es sich beispielsweise um Vinyl, Allyl, Methallyl, oder verzweigtes oder unverzweigtes 2-Butenyl, 2-Hexenyl, 3-Hexenyl, 2-Octenyl, 2-Dodecenyl, 3-Dodecenyl, 2-Tetradecenyl, 2-Hexadecenyl oder 2-Octadecenyl. Bevorzugt ist Allyl.

Bedeuten A oder $Y^1$ $C_1$-$C_6$ Alkylen, so handelt es sich um verzweigtes oder insbesondere geradkettiges Alkylen, wie beispielsweise Methylen, Aethylen , Tri-, Tetra-, Penta- oder Hexamethylen. Bevorzugt sind Methylen, Aethylen und Trimethylen.

Besonders interessant sind Stabilisatorgemische bestehend aus

a) einem Metallmercaptid der Formel I, worin Q $-Sb\langle$ oder $R^1-Sn\langle$ bedeutet, X gegebenenfalls durch eine Gruppe -OH, $-OR^2$, $-COOR^2$ oder $-OOCR^2$ substituiertes $C_1$-$C_{18}$ Alkyl, Cyclohexyl, Allyl oder Cyclohexenyl ist, $R^1$ und $R^2$ unabhängig voneinander $C_1$-$C_{18}$ bedeuten, und

b) einem cyclischen Borsäureester der Formel II, worin p die Zahlen 1 oder 2 bedeutet, Y o-Phenylen ist und,

wenn n 1 ist, Z $-OX^1$ bedeutet, worin $X^1$ $C_1$-$C_{18}$ Alkyl oder eine Gruppe $-(CH_2CH_2O)_m-R^6$ ist, wobei m die Zahlen 1 bis 3 sein kann und $R^6$ $C_1$-$C_4$ Alkyl bedeutet, und,

wenn n 2 ist, Z eine Gruppe $-O-Y^1-O-$ ist, worin $Y^1$ $C_1$-$C_3$ Alkylen, o-Phenylen oder die Gruppe $-(CH_2CH_2O)_r-CH_2CH_2-$ bedeutet, worin r die Zahlen 1 oder 2 sein können.

$R^6$ ist als $C_1$-$C_4$ Alkyl beispielsweise Methyl, Aethyl, n-Propyl, Isopropyl, sec.-Butyl, tert.-Butyl, insbesondere jedoch n-Butyl.

Von ganz besonderem Interesse sind Stabilisatorgemische bestehend aus

a) einem Metallmercaptid der Formel I, worin Q die in der letzten Bevorzugung angegebene Bedeutung hat und X eine Gruppe $-CH_2-COOR^7$ oder $-CH_2CH_2-COOR^7$ bedeutet, worin $R^7$ $C_1$-$C_8$ Alkyl ist, und

b) einem cyclischen Borsäureester der Formel II

worin p, Y und Z die in der letzten Bevorzugung angegebene Bedeutung haben.

$R^7$ ist als $C_1$-$C_8$ Alkyl beispielsweise Methyl, Aethyl, n-Propyl, Isopropyl, n-Butyl, tert.-Butyl, n-Pentyl, n-Hexyl, 2-Methylpentyl, 2,4-Dimethylpentyl, n-Octyl und insbesondere 2-Aethylhexyl.

Bevorzugt sind Stabilisatorgemische, die als Komponente a) ein Antimonmercaptid der Formel $Sb(SX)_3$ enthalten, worin X die oben angegebene Bedeutung hat.

Das Mischungsverhältnis von a) und b) variiert beispielsweise zwischen 50:50 und 99:1, bevorzugt zwischen 80:20 und 98:2 Gewichtsteilen.

Im Stabilisatorgemisch können auch Lösungsmittel enthalten sein.

Die Metallmercaptide der Formel I sind allgemein bekannt und können nach bekannten Methoden hergestellt werden.

Die cyclischen Borsäureester der Formel II sind an sich bekannt. Sollten einzelne von ihnen noch neu sein, so können sie in Analogie zu bekannten Reaktionen hergestellt werden, z.B. durch Umsetzung von Bortrioxid ($B_2O_3$) mit einer aromatischen o-Dihydroxyverbindung oder mit einem Gemisch aus einer aromatischen o-Dihydroxyverbindung und einem ein-, zwei-, drei- oder vierwertigen Alkohol bzw. Phenol im entsprechenden Molverhältnis, in Gegenwart eines als Schlepper geeigneten Lösungsmittels. Nach Entfernung des Reaktionswassers wird das Lösungsmittel destillativ entfernt. Eine weitere

Reinigung des Reaktionsproduktes ist oft nicht erforderlich, kann aber gegebenenfalls durch Umkristallisieren oder durch Rektifizierung erfolgen.

Das erfindungsgemässe synergistische Stabilisatorgemisch eignet sich hervorragend zum Schutz gegen den Abbau durch Wärmeeinwirkung von chlorhaltigen Thermoplasten.

Die Einzelbestandteile des Stabilisatorgemisches werden einzeln oder bereits vermischt, im oben erwähnten Mischungsverhältnis den zu stabilisierenden Thermoplasten vor der Verarbeitung in üblichen Einrichtungen einverleibt, und zwar in jeweiligen Mengen von 0,05 bis 4,0, bevorzugt 0,1 bis 0,5 Gew.-%, bezogen auf die gesamte Zusammensetzung.

Als chlorhaltige Thermoplaste seien genannt: Polyvinylidenchlorid und bevorzugt Polymere aus oder auf der Grundlage von Vinylchlorid. Bevorzugt sind Suspensions- und Massepolymere und ausgewaschene, also emulgatorarme Emulsionspolymere. Beim Polyvinylchlorid kann es sich um weichmacherhaltiges oder um Hart-PVC handeln.

Als Comonomere für Thermoplaste auf der Grundlage von Vinylchlorid seien genannt: Vinilidenchlorid, Transdichloräthen, Aethylen, Propylen, Butylen, Maleinsäure, Acrylsäure, Fumarsäure oder Itaconsäure.

Vor, während oder nach der Zugabe des erfindungsgemässen Stabilisatorgemisches können je nach Verwendungszweck der Formmasse weitere Zusätze einverleibt werden.

Als weitere Additive, mit denen zusammen die erfindungsgemäss verwendbaren Stabilisatoren eingesetzt werden können, sind beispielsweise zu nennen:

Antioxydantien, wie 2,6-Dialkylphenole, Derivate von alkylierten Hydrochinonen, hydroxylierte Thiodiphenyläther, Alkyliden-bisphenole, O-, N- und S-Benzylverbindungen, hydroxybenzylierte Malonester, Hydroxybenzyl-Aromaten, 2-Triazinverbindungen, Amide der β-(3,5-Di-tert.-butyl-4-hydroxyphenyl)-propionsäure, Ester der β-(3,5-Di-tert.-butyl-4-hydroxyphenyl)-propionsäure, Ester der β-(5-tert.-Butyl-4-hydroxy-3-methylphenyl)-propionsäure, Ester der 3,5-Di-tert.-butyl-4-hydroxyphenylessigsäure, Acylaminophenole, Benzylphosphonate, Aminoarylderivate, UV-Absorber und Lichtschutzmittel, wie 2-(2'-Hydroxyphenyl)-benztriazole, 2,4-Bis-(2'-hydroxyphenyl)-6-alkyl-s-triazine, 2-Hydroxybenzophenone, 1,3-Bis-(2'-hydroxybenzoyl)-benzole, Ester von gegebenenfalls substituierten Benzoesäuren, Acrylate, des weiteren Nickelverbindungen, sterisch gehinderte Amine, Oxalsäurediamide, Metalldesaktivatoren, Phosphite, peroxidzerstörende Verbindungen, Polyamidstabilisatoren, basische Costabilisatoren, Nukleierungsmittel oder sonstige Zusätze, wie z.B. Weichmacheer, Gleitmittel, Emulgatoren, Füllstoffe, Russ, Asbest, Kaolin, Talk, Glasfasern, Pigmente, optische Aufheller, Flammschutzmittel, Antistatica.

Beispiele für weitere Additive, mit denen zusammen die erfindungsgemäss verwendbaren Stabilisatoren eingesetzt werden können, finden sich in der DE-OS 2 427 853 auf Seiten 18 bis 24.

Bevorzugte Costabilisatoren sind Ca-Salze von Carbonsäuren und/oder Phenolen, die in einer Menge von 0,05 bis 4,0 Gew.-% bezogen auf die gesamte Zusammensetzung enthalten sein können.

Eine bevorzugte Formulierung für einen mit der erfindungsgemässen Stabilisatormischung stabilisierten chlorhaltigen Thermoplasten ist die folgende:

0,05 bis 3,0 Teile Metallmercaptid der Formel I
0,01 bis 1,0 Teile Borsäureester der Formel II
0,05 bis 4,0 Teile Ca-Salz einer Carbonsäure und/oder eines Phenols
82,0 bis 98,9 Teile PVC .

Das erfindungsgemässe Stabilisationsgemisch gewährleistet eine ausgezeichnete thermostabilisierende Wirkung, welche diejenige der Einzelkomponenten weit übersteigt.

Die nachfolgenden Beispiele dienen der näheren Erläuterung der Erfindung. Teile sind dabei Gewichtsteile und Prozente, Gewichtsprozente.

Herstellungsbeispiele

Beispiel 1 : 55,1 g Brenzcatechin (0,5 Mol), 17,4 g Bortrioxid (0,25 Mol), 37,5 g Triäthylenglykol (0,25 Mol) und 250 g Toluol werden miteinander vermischt. Die Mischung wird 1 Stunde lang am Sieden gehalten, das entstehende Wasser mit Hilfe eines Wasserabscheiders entfernt. Nach dem Abdestillieren des Lösungsmittels verbleibt eine ölige, hellbraune Flüssigkeit, die als Hauptbestandteil eine Verbindung der folgenden Formel enthält:

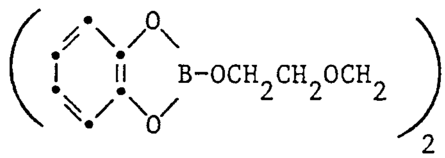

(Stabilisator 1)

Ausbeute: 99 % der Theorie.

Analyse: 5,5 % B (berechnet 5,6 %)

Beispiel 2: 44,0 g Brenzcatechin (0,4 Mol), 13,9 g Bortrioxid (0,2 Mol), 29,7 g n-Butanol (0,4 Mol) und 250 g Toluol werden in gleicher Weise wie in Beispiel 1 umgesetzt. Nach dem Entfernen des Lösungsmittels verbleibt eine braune Flüssigkeit, die durch Destillation den Orthoborsäureester der folgenden Formel ergibt:

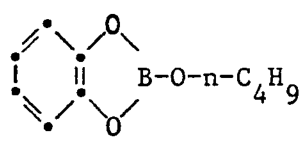

(Stabilisator 2)

Die Verbindung ist eine wasserklare Flüssigkeit vom Kp 97 bis 98° C/1 mm.

Ausbeute: 85 % der Theorie

Analyse: 5,9 % B (berechnet 5,6 %)

Beispiel 3: Ersetzt man in Beispiel 2 das Butanol mit der äquivalenten Menge Iso-tridecanol ($iC_{13}H_{27}OH$: Gemisch kurzkettenverzweigter Alkohole, wie z.B. 2,5,7-Trimethyl-decanol u.a.; Lieferant Ruhrchemie), so erhält man eine Verbindung der Formel

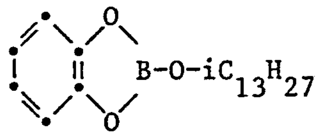

(Stabilisator 3)

Die Verbindung ist eine hellgelbe Flüssigkeit vom Kp 145-150° C/0,1 mm.
Analyse : 3,2 % B (berechnet 3,4 %).

<u>Beispiel 4:</u> Ersetzt man in Beispiel 2 das Butanol mit der äquivalenten Menge Triäthylenglykol-n-butyläther, so erhält man eine Verbindung der Formel

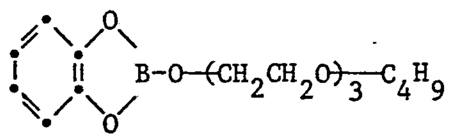

(Stabilisator 4)

Die Verbindung ist eine ölige hellbraune Flüssigkeit.
Analyse: 3,2 % B (berechnet 3,3 %).

Anwendungsbeispiele

Eine Trockenmischung bestehend aus 100 Teilen S-PVC (K-Wert), 1,0 Teil Kreide, 1,0 Teil Rutil, 0,8 Teilen Paraffinwachs, 0,8 Teilen Ca-Stearat sowie der in der nachstehenden Tabelle 1 in Teilen angegebenen Menge der beiden Kostabilisatoren a) und b) wird auf einem Laborwalzwerk bei 200° C gewalzt. Alle 3 Minuten wird ein 0,3 mm dickes Folienstück zur Beurteilung der Verfärbung entnommen. Als Mass für die Thermostabilität wird die eingetretene Vergilbung (Yellowness-Index YI) nach ASTM D 1925-70 bestimmt.

Als Komponente a) ist das Antimonmercaptid der Formel $Sb[SCH_2COO-CH_2-CH(C_2H_5)-C_4H_9]$ (Stabilisator I) verwendet worden

Tabelle 1

| Test Nr. | Testsubstanzen | | | | Yellowness-Index nach | | | | | |
|---|---|---|---|---|---|---|---|---|---|---|
| | Kostabilisator a) | Teile | Kostabilisator b) | Teile | 3 Min. | 6 Min. | 9 Min. | 12 Min. | 15 Min. | 18 Min. |
| 1 | Stabilisator I | 0,40 | - | - | 19 | 21 | 25 | 35 | 49 | 63 |
| 2 | Stabilisator I | 0,38 | Stabilisator 2 | 0,02 | 8 | 9 | 13 | 21 | 45 | 48 |
| 3 | Stabilisator I | 0,36 | Stabilisator 2 | 0,04 | 8 | 9 | 12 | 20 | 33 | 44 |
| 4 | Stabilisator I | 0,38 | Stabilisator 3 | 0,02 | 10 | 12 | 17 | 24 | 38 | 51 |
| 5 | Stabilisator I | 0,36 | Stabilisator 3 | 0,04 | 7 | 10 | 15 | 28 | 44 | 53 |
| 6 | Stabilisator I | 0,38 | Stabilisator 1 | 0,02 | 8 | 10 | 14 | 23 | 38 | 50 |
| 7 | Stabilisator I | 0,36 | Stabilisator 1 | 0,04 | 8 | 10 | 14 | 23 | 34 | 42 |
| 8 | Stabilisator I | 0,38 | Stabilisator 4 | 0,02 | 8 | 11 | 15 | 24 | 38 | 51 |
| 9 | Stabilisator I | 0,36 | Stabilisator 4 | 0,04 | 7 | 10 | 13 | 23 | 37 | 47 |

Ein Vergleich des Tests Nr. 1, der keine Borverbindung enthält, mit den Tests 2 bis 9, bei denen verschiedene Borverbindungen in wechselnden Mengen verwendet werden, demonstriert die synergistische Wirkung der Benzodioxaborole, die für sich allein in PVC keine Wirkung haben.

Patentansprüche

1. Stabilisatormischung bestehend aus

a) einem Metallmercaptid der Formel I

$Q(SX)_3$ (I)

worin Q $-Sb<$ oder $R^1-Sn<$ bedeutet, X gegebenenfalls durch eine oder mehrere Gruppen $-OH$, $-OR^2$, $-COOR^2$ oder $-OOCR^2$ substituiertes $C_1$-$C_{18}$ Alkyl, $C_3$-$C_{12}$ Cycloalkyl, $C_2$-$C_{18}$ Alkenyl, Cyclohexenyl oder eine der Gruppen der Formeln

$$-\left[(CH_2)_n-O\right]_m-R^2 \quad \text{oder} \quad -\left[(CH_2)_n-S\right]_m-R^2 \quad \text{ist,}$$

worin n die Zahlen 2 bis 8 und m die Zahlen 1 bis 200 bedeuten, $R^1$ gegebenenfalls durch eine oder mehrere Gruppen $-COOR^2$ oder $OR^2$ substituiertes $C_1$-$C_{18}$ Alkyl, Phenyl oder Benzyl und $R^2$ $C_1$-$C_{18}$ Alkyl oder $C_2$-$C_{18}$ Alkenyl sind, und

b) einem cyclischen Borsäureester der Formel II

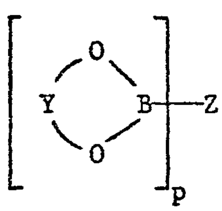

(II)

worin p die Zahlen 1 bis 4 bedeutet, Y gegebenenfalls ein- oder mehrmals durch $C_1$-$C_{18}$ Alkyl, Halogen oder durch eine Gruppe $-OR^3$ oder $-COOR^3$ substituiertes o-Phenylen oder o-Naphthylen ist, wobei $R^3$ unabhängig von $R^2$ die gleiche Bedeutung wie $R^2$ hat, und

wenn n 1 ist, Z unabhängig von $R^1$ die gleiche Bedeutung wie $R^1$ hat oder Phenyl, Naphthyl, $-OX^1$ oder $-OR^4$ bedeutet, wobei $X^1$ unabhängig von X die gleiche Bedeutung wie X hat und $R^4$ gegebenenfalls ein- oder mehrmals durch $C_1$-$C_{18}$ Alkyl, Halogen oder durch eine Gruppe $-OR^5$, $-COOR^5$ oder $-A-COOR^5$ substituiertes Phenyl oder

Naphthyl ist, worin A $C_1-C_6$ Alkylen ist und $R^5$ unabhängig von $R^2$ die gleiche Bedeutung wie $R^2$ hat, und,

wenn n 2 ist, Z eine Gruppe $-O-Y^1-O-$ bedeutet, worin $Y^1$ unabhängig von Y die gleiche Bedeutung wie Y hat und ferner $Y^1$ $C_1-C_6$ Alkylen oder eine Gruppe

$$-[(CH_2)_q-O]_r-(CH_2)_q- \quad \text{oder} \quad -[(CH_2)_q-S]_r-(CH_2)_q-$$

sein kann, worin q die Zahlen 2 bis 8 und r die Zahlen 1 bis 200 bedeuten, und ferner,

wenn n 3 ist, Z eine der Gruppen der Formeln $-OCH(CH_2O-)_2$, $CH_3CH_2-C(CH_2O-)_3$ oder

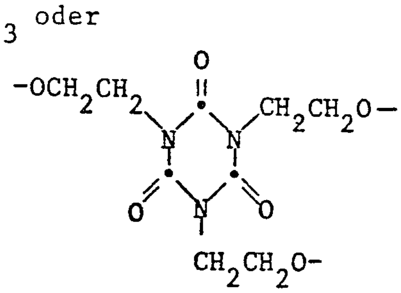

ist und,
wenn n 4 ist, Z eine Gruppe der Formel $C(CH_2O-)_4$ bedeutet.

2. Stabilisatormischung gemäss Anspruch 1 bestehend aus

a) einem Metallmercaptid der Formel I, worin Q $-Sb<$ oder $R^1-Sn<$ bedeutet, X gegebenenfalls durch eine Gruppe $-OH$, $-OR^2$, $-COOR^2$ oder $-OOCR^2$ substituiertes $C_1-C_{18}$ Alkyl, Cyclohexyl, Allyl oder Cyclohexenyl ist, $R^1$ und $R^2$ unabhängig voneinander $C_1-C_{18}$ bedeuten, und

b) einem cyclischen Borsäureester der Formel II, worin p die Zahlen 1 oder 2 bedeutet, Y o-Phenylen ist und,

wenn n 1 ist, Z $-OX^1$ bedeutet, worin $X^1$ $C_1-C_{18}$ Alkyl oder eine Gruppe $-(CH_2CH_2O)_m-R^6$ ist, wobei m die Zahlen 1 bis 3 sein kann und $R^6$ $C_1-C_4$ Alkyl bedeutet, und,

wenn n 2 ist, Z eine Gruppe $-O-Y^1-O-$ ist, worin $Y^1$ $C_1-C_3$ Alkylen, -o-Phenylen oder die Gruppe $-(CH_2CH_2O)_r-CH_2CH_2-$ bedeutet, worin r die Zahlen 1 oder 2 sein kann.

3. Stabilisatormischung gemäss Anspruch 2 bestehend aus

a) einem Metallmercaptid der Formel I, worin Q die in Anspruch 2 angegebene Bedeutung hat und X eine Gruppe $-CH_2-COOR^7$ oder $-CH_2CH_2-COOR^7$ bedeutet, worin $R^7$ $C_1-C_8$ Alkyl ist, und

b) einem cyclischen Borsäureester der Formel II

worin p, Y und Z die in Anspruch 2 angegebene Bedeutung haben.

4. Stabilisatormischung gemäss Anspruch 1, dadurch gekennzeichnet, dass als Komponente a) ein Antimonmercaptid der Formel $Sb(SX)_3$ enthalten ist, worin X die in Anspruch 1 angegebene Bedeutung hat.

5. Stabilisatormischung gemäss Anspruch 1,dadurch gekennzeichnet, dass die Komponenten a) und b) in einem Mischungsverhältnis zwischen 50:50 und 99:1 enthalten sind.

6. Stabilisierte Zusammensetzung enthaltend ein chlorhaltiges thermoplastisches Polymer und als Stabilisator ein Stabilisatorgemisch gemäss Anspruch 1 in einer Menge von 0,05 bis 4,0 Gew.-%, bezogen auf die gesamte Zusammensetzung.

7. Stabilisierte Zusammensetzung gemäss Anspruch 6, dadurch gekennzeichnet, dass sie zusätzlich einen weiteren Stabilisator enthält.

8. Stabilisierte Zusammensetzung gemäss den Ansprüchen 6 und 7, dadurch gekennzeichnet, dass der chlorhaltige Thermoplast ein Polymer aus oder auf der Grundlage von Vinylchlorid ist.

9. Verwendung einer Stabilisatormischung gemäss Anspruch 1 zum Stabilisieren von chlorhaltigen thermoplastischen Polymeren.